# DEMANDE DE BREVET EUROPEEN

(11) **EP 1 459 632 A1**
(43) Date de publication de la demande: **22.09.2004**
(21) Numéro de dépôt: 03291179.4
(22) Date de dépôt: 20.05.2003
(51) Int. Cl.: A21B 3/13

(54) **Moule souple à circulation d'air**

(30) Priorité: 19.03.2003 FR 0303382
(71) Demandeur: De Buyer, 88340 Le Val d'Ajol (FR)
(72) Inventeur: De Buyer, Herve, 88340 Le Val D'Ajol (FR)
(74) Mandataire: Cabinet HERRBURGER

(57) **Abrégé**

Moule souple destiné à l'industrie alimentaire, notamment à la cuisson d'articles de pâtisserie et de cuisine sucrés ou salés, susceptibles de résister à une très large plage de température allant d'environ -70°C à +300°C et fabriqué par moulage suite à l'utilisation de silicones vulcanisant à chaud ou à froid, et de préférence de polyméthylsiloxane de haut poids moléculaire vulcanisant à environ 150 à 160°C, ce moule étant constitué par une plaque de moulage (1) équipée d'alvéoles de moulage (2) uniformément réparties sur l'une de ces faces ou première face et faisant saillie sur son autre face ou seconde face.

La plaque de moulage (1) est équipée d'un ensemble d'orifices de circulation d'air (3) uniformément répartis entre les alvéoles (2) sur la totalité de sa surface.

## Description

La présente invention concerne un moule souple destiné à l'industrie alimentaire, notamment à la cuisson d'articles de pâtisserie et de cuisine sucrés ou salés susceptible de résister à une très large plage de températures allant d'environ -70°C à +300°C.

Les moules du type susmentionné ont, pendant longtemps, été fabriqués en métal (acier ou aluminium) ; l'application d'une pellicule de corps gras (huile ou beurre) sur leur paroi interne n'empêchait pas leurs utilisateurs de se heurter, lors du démoulage, à des problèmes d'adhérence et de collage nuisant notablement à l'aspect du produit final.

En outre, le nettoyage des moules ainsi souillés était toujours long et incommode et nécessitait fréquemment des opérations de grattage favorisant le collage et aboutissant à la longue à un endommagement du moule et donc à une diminution de sa durée de vie.

Pour résoudre ces problèmes, il a été proposé d'appliquer sur les parois internes des moules métalliques des revêtements anti-adhérents, en particulier en polytétrafluoréthylène ou silicones ; malgré ses avantages certains, une telle application ne s'est pas avérée totalement satisfaisante, en particulier en raison de la fragilité des revêtements anti-adhérents et de leur grande sensibilité à l'abrasion dont la conséquence est qu'ils deviennent très rapidement inutilisables.

De plus, la mise en oeuvre de ces revêtements anti-adhérents ne permet pas de résoudre tous les problèmes rencontrés par les utilisateurs lors du démoulage, compte tenu de la rigidité des moules métalliques : il est en effet souvent nécessaire, pour extraire le produit cuit, de donner des coups sur le fond ou les parois latérales du moule, voire de passer la lame d'un couteau entre ce dernier et le produit.

Pour remédier à ces inconvénients, on a déjà proposé, conformément au document FR-2 747 886 un moule souple fabriqué par moulage suite à l'utilisation de silicones vulcanisant à chaud ou à froid, et de préférence de polyméthylsiloxane de haut poids moléculaire vulcanisant à environ 150 à 160°C.

Ce moule qui est susceptible de résister à une très large plage de températures allant d'environ -70°C à +300°C présente, en plus de son caractère anti adhérent, de nombreux avantages lorsqu'il est mis en oeuvre pour la fabrication de pièces de pâtisserie uniques de relativement grande dimension (moule à génoise, moule à cake, à brioche, à savarin, ...). Il présente en effet une épaisseur moyenne de l'ordre de 1,5 à 2,5 mm, ce qui lui confère une très grande souplesse et une large facilité de déformation ; de plus, la mise en oeuvre d'un processus de moulage permet d'obtenir des surfaces extrêmement lisses et donc fortement anti-adhérentes, ce qui évite tout risque de collage du produit cuit sur les parois du moule et permet donc un démoulage facile.

Un autre avantage d'une telle fabrication par moulage est lié au fait qu'elle permet de reproduire toutes les formes de moules métalliques existant aujourd'hui, y compris les plus compliqués et même celles comportant des angles vifs et en particulier des angles droits.

Il est cependant à noter qu'à côté des moules unitaires du type susmentionné, les pâtissiers professionnels tout comme les cuisiniers amateurs utilisent fréquemment des plaques de moulage munies d'alvéoles uniformément réparties sur leur surface de manière à pouvoir fabriquer en une seule « fournée » une série de biscuits ou gâteaux de dimension plus réduite (moule à madeleines, à financiers, ...).

On a ainsi adapté le principe des moules souples à base de silicones connus à des moules constitués par une plaque de moulage équipée d'alvéoles de moulage uniformément réparties sur l'une de ses faces ou première face et faisant saillie sur son autre face ou seconde face.

Une telle adaptation n'a cependant pas été pleinement satisfaisante compte tenu en particulier du fait que lors de la cuisson, l'air stagne entre les alvéoles de moulage sur la seconde face du moule et donc ne circule pas assez ce qui nuit fortement tant à l'aspect qu'aux qualités gustatives du produit fini.

L'objet de l'invention est de remédier à cet inconvénient en proposant un moule souple du type susmentionné à circulation d'air chaud ou froid.

Selon l'invention, un tel moule est caractérisé en ce que la plaque de moulage est équipée d'un ensemble d'orifices de circulation d'air uniformément répartis entre les alvéoles, sur la totalité de sa surface.

Ainsi, l'air chaud, qui tend à se déplacer vers le haut peut passer au travers des orifices de moulage pour se renouveler en permanence et venir « baigner » l'ensemble de la plaque de moulage et permettre une cuisson rapide et régulière.

Il est à noter que le domaine d'utilisation du moule souple conforme à l'invention n'est pas limité à la cuisson de denrées alimentaires, mais que ce moule est également adapté à la réfrigération de tels produits, au quel cas la circulation d'air froid au travers des orifices de circulation d'air s'effectue facilement non plus de bas en haut mais de haut en bas.

La plaque de moulage est en règle générale équipée d'une série d'alvéoles de moulage réparties géométriquement sur sa surface notamment selon des rangées par exemple parallèles.

Dans cette configuration, la plaque de moulage est équipée d'une série d'orifices de circulation d'air répartis géométriquement autour des alvéoles de moulage notamment selon des rangées par exemple parallèles situées entre les rangées d'alvéoles de moulage.

Dans ce dernier cas, les orifices de circulation d'air sont en règle générale disposés en quinconce par rapport aux alvéoles de moulage.

En d'autres termes, dans une telle configuration, un orifice de circulation d'air est percé dans chacun des intervalles séparant les alvéoles de moulage voisines.

Bien entendu la géométrie des alvéoles de moulage et des orifices de circulation d'air peut être quelconque sans pour cela sortir du cadre de l'invention et dépend dans chaque cas de la géométrie de la plaque de moulage (rectangulaire, circulaire, polygonale, ...).

Pour obtenir toute satisfaction, il est nécessaire que les orifices de circulation d'air aient des dimensions suffisantes pour permettre une bonne aération ou ventilation des deux faces de la plaque de moulage, mais parallèlement adaptées pour garantir la bonne tenue de la plaque.

Selon l'invention, on a pu satisfaire à ce double impératif grâce à des orifices de circulation d'air de forme essentiellement circulaire, ayant un diamètre compris entre environ 0,2 et 2,0 cm.

Là encore, la forme et les dimensions des orifices de circulation d'air peuvent être quelconques sans pour cela sortir du cadre de l'invention et dépendent de la géométrie de la plaque de moulage et du type de produit à traiter.

Malgré un choix adapté des dimensions des orifices de circulation d'air, les plaques de moulage ont une très grande souplesse qui entraîne des difficultés de manipulation, tant lors de l'enfournage ou du défournage que lors du démoulage.

Pour remédier à cet inconvénient et augmenter la rigidité des moules antérieurs susmentionnés décrits dans le brevet FR-2 747 886 on a déjà proposé conformément au document FR-2 786 668, une plaque de moulage dans laquelle, les alvéoles de moulage sont reliées, sur la seconde face de celle-ci, par des nervures de rigidification réparties géométriquement notamment des nervures de rigidification parallèles s'étendant dans deux directions perpendiculaires de façon à définir des moulures de rigidification de forme rectangulaire situées dans chacun des intervalles séparant les alvéoles de moulage voisines.

L'invention est tout spécialement adaptée à des plaques de moulage de ce type, dans lesquelles les moulures de rigidification sont équipées d'un orifice de circulation d'air percé à leur partie centrale.

Les nervures de rigidification peuvent bien entendu être inexistants si leur présence ne se justifie pas.

En conclusion, les orifices de circulation d'air équipant le moule souple qui fait l'objet de l'invention permettent de garantir la ventilation de ce moule pendant le chauffage ou le refroidissement pour obtenir une température régulière autour des alvéoles recevant le produit en préparation.

Les caractéristiques du moule souple qui fait l'objet de l'invention seront décrites plus en détail en se référant aux dessins non limitatifs annexés dans lesquels :
- la figure 1 représente la première face du moule souple ;
- la figure 2 représente la seconde face de ce même moule.

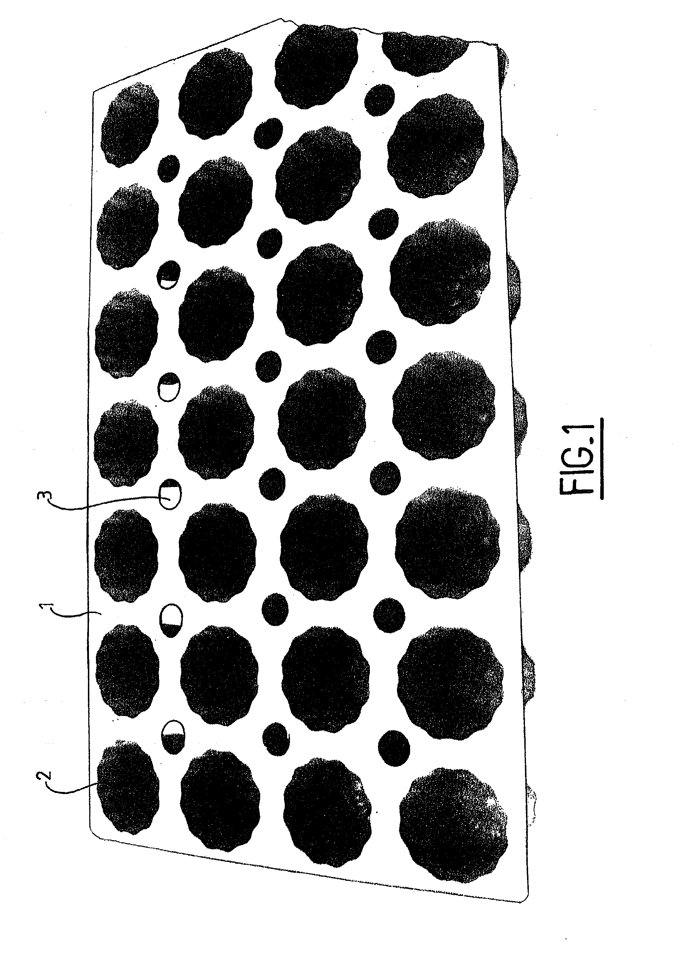

Selon la figure 1, le moule souple est constitué par une plaque en silicone 1 équipée d'alvéoles de moulage 2 réparties selon des rangées parallèles sur la totalité de sa surface.

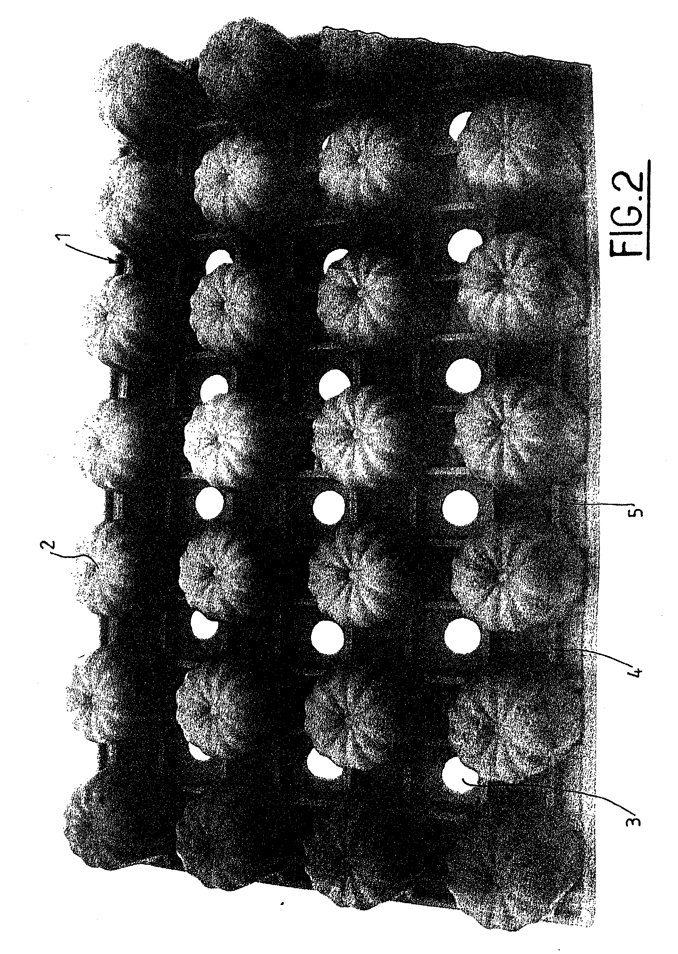

Selon la figure 2, les alvéoles de moulage 2 font saillie sur la seconde face de la plaque de moulage.

Selon les figures 1 et 2, la plaque 1 est en outre équipée d'un ensemble d'orifices de circulation d'air 3 de forme essentiellement circulaire uniformément répartis entre les alvéoles de moulage 2.

Les orifices de circulation d'air 3 sont eux aussi répartis selon des rangées parallèles. Ces rangées sont situées entre les rangées d'alvéoles de moulage 2.

Les alvéoles de moulage 2 et les orifices de circulation d'air 3 sont disposés en quinconce, de sorte qu'un orifice de circulation d'air 3 soit percé dans chaque intervalle séparant quatre alvéoles de moulage 2 voisines.

Selon la figure 2, les alvéoles de moulage 2 sont reliées sur la seconde face de la plaque de moulage 1 par des nervures de rigidification parallèles 4 s'étendant dans deux directions perpendiculaires.

Ces rainures de rigidification 4 définissent des moulures de rigidification 5 de forme carrée qui sont situées dans chacun des intervalles séparant quatre alvéoles de moulage 2 voisines.

Les moulures de rigidification 5 sont chacune équipées d'un orifice de circulation d'air percé à leur partie centrale.

## Revendications

1. Moule souple destiné à l'industrie alimentaire, notamment à la cuisson d'articles de pâtisserie et de cuisine sucrés ou salés, susceptibles de résister à une très large plage de température allant d'environ -70°C à +300°C et fabriqué par moulage suite à l'utilisation de silicones vulcanisant à chaud ou à froid, et de préférence de polyméthylsiloxane de haut poids moléculaire vulcanisant à environ 150 à 160°C, ce moule étant constitué par une plaque de moulage (1) équipée d'alvéoles de moulage (2) uniformément réparties sur l'une de ces faces ou première face et faisant saillie sur son autre face ou seconde face,
**caractérisé en ce que**
la plaque de moulage (1) est équipée d'un ensemble d'orifices de circulation d'air (3) uniformément répartis entre les alvéoles (2) sur la totalité de sa surface.

2. Moule souple selon la revendication 1, constitué par une plaque de moulage (1) équipée d'une série d'alvéoles de moulage (2) réparties géométriquement sur sa surface notamment selon des rangées par exemple parallèles,
**caractérisé en ce que**
la plaque de moulage (1) est équipée d'une série d'orifices de circulation d'air (3) répartis géométriquement autour des alvéoles de moulage notamment selon des rangées par exemple parallèles situées entre les rangées d'alvéoles de moulage (2).

3. Moule souple selon la revendication 2,
**caractérisé en ce que**
les orifices de circulation (3) d'air sont disposés en quinconce par rapport aux alvéoles de moulage (2).

4. Moule souple selon l'une quelconque des revendications 1 à 3,
**caractérisé en ce que**
les orifices de circulation d'air (3) ont une forme essentiellement circulaire et un diamètre compris entre environ 0,2 et 2,0 cm.

5. Moule souple selon l'une quelconque des revendications 1 à 4, dans lequel les alvéoles de moulage (2) sont reliées sur la seconde face de la plaque de moulage (1) par des nervures de rigidification (4) réparties géométriquement, notamment des nervures de rigidification parallèles s'étendant dans deux directions perpendiculaires de façon à définir des moulures de rigidification (5) de forme rectangulaire situées dans chacun des intervalles séparant les alvéoles de moulage (2) voisines,
**caractérisé en ce que**
les orifices de circulation d'air (3) sont percés entre les nervures de rigidification (4).

6. Moule souple selon la revendication 5,
**caractérisé en ce que**
les moulures de rigidification (5) sont équipées d'un orifice de circulation d'air percé à leur partie centrale.
